Europäisches Patentamt

European Patent Office

Office européen des brevets

(19)

(11) Veröffentlichungsnummer: **0 251 098**
**B1**

(12) # EUROPÄISCHE PATENTSCHRIFT

(45) Veröffentlichungstag der Patentschrift:
29.08.90

(21) Anmeldenummer: 87108893.6

(22) Anmeldetag: 22.06.87

(51) Int. Cl.⁵: **G06F 15/20**

(54) **Verfahren zum Erstellen und Ausfüllen von Formularen mittels einer Textstation.**

(30) Priorität: 25.06.86 DE 3621300

(43) Veröffentlichungstag der Anmeldung:
07.01.88 Patentblatt 88/1

(45) Bekanntmachung des Hinweises auf die Patenterteilung:
29.08.90 Patentblatt 90/35

(84) Benannte Vertragsstaaten:
CH DE FR GB IT LI SE

(56) Entgegenhaltungen:
DE-A- 3 328 213
DE-A- 3 411 661
GB-A- 2 156 112

(73) Patentinhaber: Siemens Aktiengesellschaft,
Wittelsbacherplatz 2, D-8000 München 2(DE)

(72) Erfinder: Hirsch, Lucian, Dipl.-Ing., Deisenhofener
Strasse 21, D-8000 München 90(DE)

ACTORUM AG

## Beschreibung

Die Erfindung betrifft ein Verfahren zum Erstellen und Ausfüllen von Formularen mittels einer Textstation gemäß dem Oberbegriff des Patentanspruches 1.

Verfahren zum Erstellen und Ausfüllen von Formularen mittels Textstationen sind allgemein bekannt. Textstationen bestehen im allgemeinen (T 4200 Fa. Siemens) aus einem Bildschirm, einer als Eingabeeinrichtung dienenden Tastatur, einer Zentraleinheit und einer mit der Zentraleinheit kombinierten Druckeinrichtung. Weiters ist mit der Zentraleinheit gekoppelt ein Sekundärspeicher in Form einer Floppydisk.

Werden mit einer derartigen Textstation Formulare erstellt, so wird zunächst das Formular in Form einer Maske auf dem Bildschirm über die Tastatur erzeugt. Eine derartige Maske kann dabei aus einzelnen Festfeldern bestehen, in denen die erklärenden Texte dargestellt sind und sie kann variable Felder aufweisen, in denen beim Ausfüllen des Formulares der entsprechende Fülltext eingeschrieben wird (DE-OS 33 28 213). Nach dem Erstellen der Formularmaske wird die Maske im Sekundärspeicher abrufbar abgespeichert.

Beim Aufruf eines derartigen Formulares, z.B. dem Schema einer Rechnung oder eines Lieferscheines wird die Formularmaske aus dem Sekundärspeicher abgerufen und in einen Arbeitsspeicher in der Zentraleinheit der Textstation übertragen. Gleichzeitig wird sie auf der Anzeigeeinrichtung (Bildschirm) dargestellt. In die auf dem Bildschirm erkenntlich gemachten variablen Feldern des Formulares können nun die entsprechenden Texte eingeschrieben werden. Beim Drücken einer Tabulatortaste springt die die Schreibstellen kennzeichnende Schreibmarke automatisch jeweils an den Anfang der linksbündigen bzw. an das Ende der rechtsbündigen variablen Felder.

Ist die Textstation z.B. beim Teletexbetrieb mit einem Modem gekoppelt, kann das erstellte und ausgefüllte Formular in bekannter Weise als Nachricht übertragen werden.

Bei Textstationen dieser Art besteht nun das Problem, daß beim Ausfüllen des auf dem Bildschirm dargestellten Formulares die Gefahr besteht, daß versehentlich der in den Festfeldern dargestellte erklärende Text gelöscht wird bzw. daß die Dimension der variablen Felder nicht eingehalten wird. Weiterhin ist es notwendig, abhängig von dem einzuschreibenden Text, der z.B. auch eine Zahl sein kann, diesen Text links- oder rechtsbündig im variablen Feld aufzubauen. Dies alles erfordert eine erhöhte Konzentration der Bedienperson mit der Gefahr von fehlerhafter Texteingabe.

Aufgabe der Erfindung ist es deshalb, ein Verfahren zum Erstellen und Ausfüllen von Formularen mittels einer Textstation bereitzustellen, das einfach und betriebssicher arbeitet und bei dem, insbesondere bei der Eingabe, eine Bedienerführung in Form einer automatischen Plausibilitätskontrolle erfolgt.

Das Verfahren soll dabei so ausgestaltet sein, daß es auch für den Fernschreibverkehr verwendet werden kann.

Diese Aufgabe wird bei einem Verfahren der eingangs genannten Art gemäß dem kennzeichnenden Teil des ersten Patentanspruches gelöst.

Vorteilhafte Ausführungsformen der Erfindung sind in den Unteransprüchen gekennzeichnet.

Durch die automatische Plausibilitätskontrolle der Eingabe innerhalb und außerhalb der Eingabefelder beim Erstellen und beim Ausfüllen des Formulares wird sichergestellt, daß z.B. die Eingabefelder richtig aufgebaut bzw. beim Ausfüllen von Formularen nur die Eingabefelder beschrieben werden, obwohl die Schreibmarke, die die Position des einzugebenden Textes angibt, frei beweglich ist.

Bei einer versuchten Falscheingabe wird automatisch eine Warneinrichtung ausgelöst, die in Form eines akustischen Signales die Bedienperson auf diese Fehleingabe hinweist, oder aber die Falscheingabe wird als solche unterbunden, indem die Zentraleinheit unabhängig von den über die Tastatur eingegebenen Zeichen nur die richtigen Zeichen annimmt.

Gemäß der Erfindung finden drei Arten von Eingabefeldern Anwendung, nämlich linksbündige Felder fester Länge, rechtsbündige Felder fester Länge und linksbündige Felder freier Länge. Damit können z.B. für Rechnungen oder Lieferscheine sowohl Texte als auch Zahlen entsprechend dargestellt werden. Durch die Anordnung linksbündiger Felder freier Länge ist es möglich, z.B. einen Raum für ergänzende Texte vorzusehen.

Die Erfindung stellt beim Erstellen von Formularen sicher, daß innerhalb der Eingabefelder fester Länge nur das Zeichen "Zwischenraum" angegeben wird und auf diese Weise unbeschriebene Felder dargestellt werden.

Das erfindungsgemäße Verfahren ist einfach, ermöglicht ein gutes Zeitverhalten des Steuerprogrammes und ist durch die automatische Plausibilitätskontrolle der Eingabe sehr benutzerfreundlich.

Die Feldmarken werden durch Symbole dargestellt, die eindeutig von einem normalen Text zu unterscheiden sind. Die Schreibmarke ist frei beweglich, außerdem wird ein Eingabefeld bei Betätigung der Taste "Tabulator" direkt links oder rechtsbündig angesprungen.

Beim Erstellen von Formularen wird sichergestellt, daß Felder fester Länge nur eine Zeile lang sind, daß weiterhin Feldanfangs- und Feldendemarken vom gleichen Typ sind und daß bei Eröffnung eines neuen Eingabefeldes nur Zwischenraum und Feldendemarken eingebbar sind.

Beim Ausfüllen von Formularen wiederum ist die Eingabe nur innerhalb der Felder möglich. Bei der Verwendung in einer Fernschreibmaschine wird außerdem die Eingabe für Zeichen "Wagenrücklauf" und "neue Zeile" innerhalb eines Feldes fester Länge unterbunden. Nur eine Zeile ohne Formularmarken - also in einem Feld freier Länge - darf vollständig gelöscht werden.

Bei dem Verfahren werden sämtliche Editierfunktionen des Textverarbeitungssystemes voll aufrechterhalten.

Eine Ausführungsform der Erfindung ist in den Zeichnungen dargestellt und wird im folgenden beispielsweise näher beschrieben. Es zeigen

Fig. 1 ein Blockschaltbild einer Textstation zur Durchführung des Verfahrens

Fig. 2 eine schematische Darstellung einer Formularmaske bei der Erstellung und

Fig. 3 eine schematische Darstellung eines gemäß dem erfindungsgemäßen Verfahren ausgefüllten Formulares.

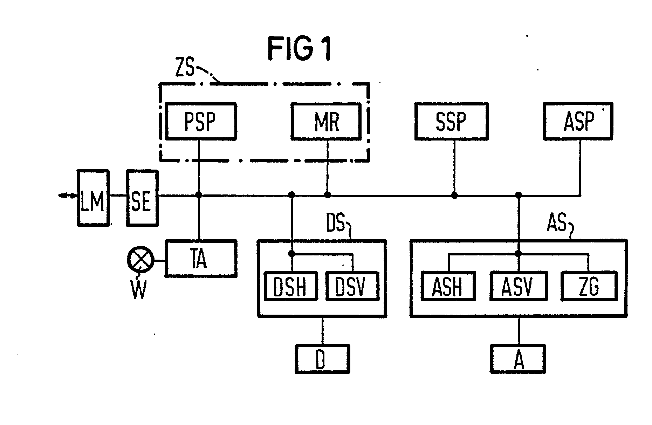

Die in der Fig. 1 dargestellte Anordnung stellt eine Textstation in diesem Falle eine Fernschreibstation dar. Die Textstation weist eine aus einem Programmspeicher PSP und einem Mikrorechner MR bestehende Zentralsteuerung ZS, sowie Speichereinrichtungen in Form eines Arbeitsspeichers ASP und eines Sekundärspeichers SSP auf. Weiterhin enthält die Textstation eine Tastatur TA zur Eingabe von Zeichen, sowie eine Druckeinrichtung D und eine Anzeigeeinrichtung A. Die Anzeigeeinrichtung A ist hierbei vorzugsweise als Bildschirm ausgebildet. Für die Druckeinrichtung D und die Anzeigeeinrichtung A ist jeweils eine Steuereinrichtung DS bzw. AS vorgesehen. Die Steuereinrichtung DS für die Druckeinrichtung D enthält einen Steuerteil DSH zur horizontalen Bewegung des Druckerwagens, sowie ein Steuerteil DSV zur vertikalen Bewegung des Aufzeichnungsträgers in der Druckeinrichtung D. Die Steuereinrichtung AS für die Anzeigeeinrichtung A besteht neben einem Zeichengenerator ZG aus jeweils einem Steuerteil ASH bzw. ASV für die horizontale bzw. vertikale Bewegung eines auf der Anzeigeeinrichtung A befindlichen Schreibstellenanzeigers (Schreibmarke). Die beiden Steuereinrichtungen DS und AS stehen über einen Steuerbus miteinander in Verbindung. Weiterhin ist an den Steuerbus angeschlossen ein Sendeempfangsbaustein SE sowie ein mit dem Sende-/Empfangsbaustein SE verbundenes Leitungsmodul LM zum Anschluß an das Fernschreibnetz.

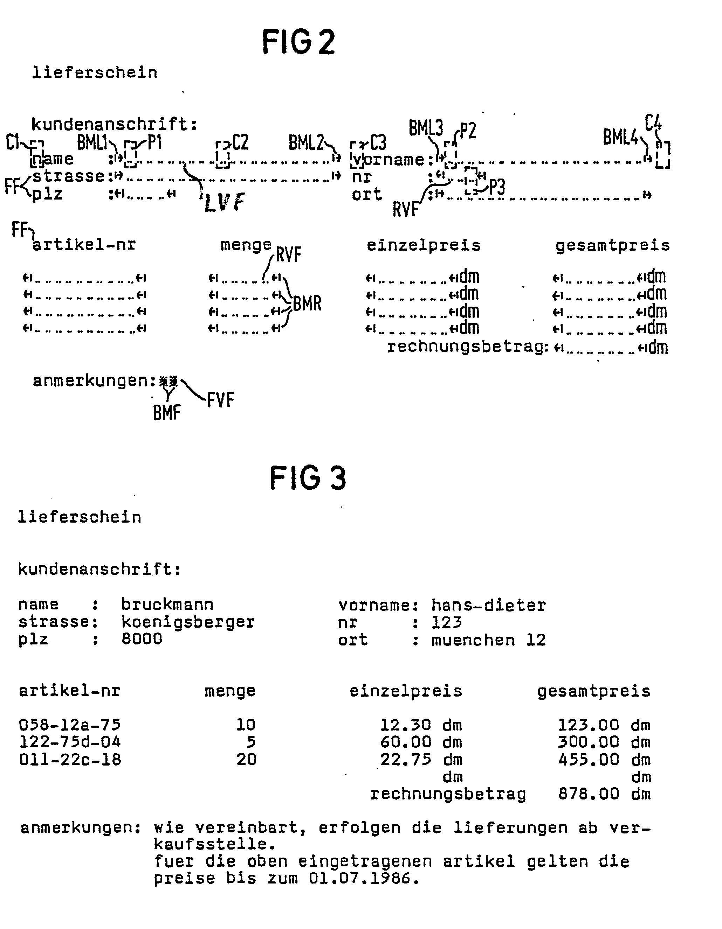

Zum Erstellen eines Formulares, z.B. eines Lieferscheines gemäß Fig. 2, werden die über die Tastatur TA eingegebenen Zeichen zunächst noch nicht gedruckt bzw. ausgesendet, sondern in dem Arbeitsspeicher ASP abgelegt und auf die Anzeigeeinrichtung A geschrieben. Dadurch besteht die Möglichkeit, die eingegebenen Zeichen auf ihre Richtigkeit hin zu überprüfen und gegebenenfalls eine Korrektur oder Neueingabe durchzuführen. Die im Arbeitsspeicher ASP abgelegten Zeichen werden erst zu einem späteren Zeitpunkt aus dem Arbeitsspeicher ASP ausgelesen und anschließend mittels der Druckeinrichtung D auf einem Aufzeichnungsträger ausgedruckt bzw. über das Leitungsmodul LM übertragen.

Um eine Vielzahl von einzelnen Formularmasken speichern zu können ist ein Sekundärspeicher SSP in Form eines Floppydiskgerätes vorgesehen, von dem die verschiedenen erstellten Formularmasken abgerufen werden können und zwar dadurch, daß sie aus dem Floppydiskgerät zur Anzeige an der Anzeigevorrichtung A zunächst in den Arbeitsspeicher ASP geladen werden.

Das erfindungsgemäße Verfahren wird nun anhand der Figuren näher erläutert.

Soll gemäß Fig. 2 ein Formular, in diesem Fall ein Lieferschein, erstellt werden, so wird mit Hilfe der Tastatur TA auf der Anzeigevorrichtung A die Struktur des Formulares - im folgenden als Formularmaske bezeichnet - erstellt. Die Formularmaske weist im Rahmen von Festfeldern FF erklärende Texte z.B. Lieferschein, Kundenanschrift, Name, Straße etc. auf. Weiters enthält sie variable Felder zum Beschreiben. Diese variablen Felder können dabei sein: linksbündige variable Felder fester Länge zur Aufnahme von Text LVF, rechtsbündige variable Felder RVF zur Aufnahme von Zahlen und linksbündige variable Felder freier Länge FVF, z.B. zur Annahme von Anmerkungen. Die Grenzen der variablen Felder werden dabei durch entsprechende Begrenzungsmarkierungen BM begrenzt und zwar entsprechend der Fig. 2 in unterschiedlicher Ausführung als linksbündige Feldmarkierung BML und als rechtsbündige Feldmarkierung BMR. Zur Darstellung der Grenzen des linksbündigen Feldes freier Länge zur Aufnahme von Anmerkungen, wird das aus der Fig. 2 ersichtliche Zeichen BMF verwendet.

Bei der Eingabe der Formularmaske sorgt nun die Zentralsteuerung ZS dafür, daß die Felder fester Länge BML und BMR nur maximal eine Schreibzeile lang sind. Weiters wird sichergestellt, daß die Feldanfangs- und Feldendmarken vom gleichen Typ sind. Es ist also nicht möglich, Felder mit einer Begrenzungsmarke BML für linksbündige Felder fester Länge zu eröffnen und mit einer Begrenzungsmarke für rechtsbündige Felder fester Länge BMR zu beenden. Weiterhin wird bei der Eröffnung von variablen Feldern dafür gesorgt, daß nur die Zeichen "Zwischenraum" und die Zeichen "Feldendemarken" eingebbar sind.

Beim Versuch der Eingabe anderer Zeichen wird über eine mit der Tastatur TA gekoppelte Warneinrichtung W in Form eines Summers ein Warnton abgegeben. Anstelle der Warneinrichtung W ist es auch möglich, ein entsprechendes Warnzeichen an der Anzeigeeinrichtung A darzustellen.

Zur Überprüfung der vorstehend beschriebenen Bedingungen ist eine automatische Plausibilitätskontrolle vorgesehen. Diese dient dazu, die Position der Schreibmarke in- oder außerhalb der variablen Felder festzustellen. Zu diesem Zwecke wird über die Zentralsteuerung ZS der aktuellen Position der Schreibmarke ein Kennbit zugeordnet. Bei jeder Änderung der Position der Schreibmarke wird die Anzahl der die variablen Felder begrenzenden Markierungen zwischen der alten und der neuen Position ermittelt und bei einer geraden Anzahl der logische Zustand des Kennbits beibehalten und bei einer ungeraden Anzahl der logische Zustand des Kennbits verändert. Je nach Wahl kann dabei der Position innerhalb der variablen Feldern der logische Zustand "Null" und der Position außerhalb der variablen Felder der logische Zustand "Eins" im Kennbit zugeordnet sein. Dieser logische Zustand wird dann von der Zentralsteuerung erfaßt und in Abhängigkeit davon die Eingabe von Zeichen über die Tastatur der beschriebenen Plausibilitätskontrolle unterzogen. Dabei werden entweder nicht zugelassene Zeichen bei der Eingabe, z.B. "Wagenrücklauf" "Zeilenvorschub", innerhalb der variablen Felder fester Länge unterdrückt oder aber es wird bei der Eingabe nicht zugelassener Zeichen sowohl beim Erstellen von Formularen als auch beim Ausfüllen von Formularen die Warneinrichtung W betätigt, die z.B. ein akustisches Signal auslösen kann.

Die Funktion zur Ermittlung der Position der Schreibmarke wird nun im folgenden anhand der Fig. 2 näher beschrieben.

Wird z.B. die Schreibmarke von der Position C1 am Anfang der Zeile mit dem Namen zur Position C2 bewegt, dann ist die Anzahl der die variablen Felder begrenzenden Begrenzungsmarkierungen BM zwischen der alten und der neuen Position (C1, C2) 1, damit wird der logische Zustand des Kennbits verändert und zwar entweder von "Null" auf "Eins" oder umgekehrt je nach Ausgangslage. Aus dem Kennbit der Funktion läßt sich nun ableiten, daß sich die Schreibmarke in der Position C2 innerhalb eines variablen Feldes fester Länge - in diesem Fall dem linksbündigen Feld fester Länge - LVF befindet. Bei einer weiteren Verschiebung der Schreibmarke von der Position C2 zur Position C3 ist die Anzahl der zwischen der Position C2 und der Position C3 liegenden Begrenzungsmarkierungen BM wiederum 1, was wiederum eine Veränderung des Inhaltes des Kennbits zur Folge hat. Damit hat das Kennbit in der Position C3 den logischen Zustand der Ausgangslage C1, was darauf hinweist, daß sich in der Position C3 die Schreibmarke außerhalb eines variablen Feldes befindet. Ein weiteres Verschieben der Position C3 zur Position C4 bewirkt keine Änderung des logischen Zustandes des Kennbits, weil bei dieser Verschiebung der Schreibmarke eine gerade Anzahl von Begrenzungsmarken BML3, BML4 überschritten wird.

Nach der vorstehend beschriebenen Erstellung der Formularmaske kann die Maske z.B. unter der Bezeichnung "Lieferschein" auf der Floppydisk abgespeichert werden. Soll nun mit Hilfe der Fernschreibmaschine ein Lieferschein erstellt und ausgefüllt und übertragen werden, so wird mit Hilfe der Tastatur TA unter Eingabe des Namens "Lieferschein" die Formularmaske Lieferschein aufgerufen. Sie erscheint entsprechend der in der Fig. 2 dargestellten Form am Bildschirm der Anzeigeeinrichtung A. Durch Betätigung der auf der Tastatur befindlichen Tabulatortaste springt die Schreibmarke gemäß Fig. 2 in die Position P1 an der ersten Eingabestelle des linksbündigen Feldes fester Länge LVF. Nach Eingabe des Textes springt die Schreibmarke bei erneuter Betätigung der Tabulatortaste zur Position P2, nämlich der ersten Einschreibposition am nächsten linksbündigen Feld fester Länge (Vorname). Beim Erreichen von rechtsbündigen Feldern (RVF "Nr") springt die Schreibmarke auf die letzte Eingabestelle (P3).

Nach dem Ausfüllen des Lieferscheines können in der Rubrik "Anmerkungen" und in dem dort definierten linksbündigen Feld freier Länge FVF erklärende Texte eingeschrieben werden. Diese Texte sind damit dem "Lieferschein" zugeordnet und werden mit ihm zusammen übertragen.

Nach Auslösen der Übertragungsfunktion über den Sendeempfangsbaustein SE bzw. des Leitungsmoduls LM wird der so aufgefüllte und erstellte Lieferschein übertragen und eventuell an einer Druckeinrichtung D ausgedruckt. Damit ergibt sich das aus der Fig. 3 ersichtliche Formularbild wobei die Feldbegrenzungsmarken BM nicht mehr ausgedrückt werden.

In dem beschriebenen Beispiel für den Fernschreibverkehr werden nur Kleinbuchstaben verwendet. Bei Lokalbetrieb können bei entsprechender Ausgestaltung des Druckers sowohl Groß- als auch Kleinbuchstaben verwendet werden.

**Patentansprüche**

1. Verfahren zum Erstellen und Ausfüllen von Formularen mittels einer Textstation, bei dem mittels einer Tastatur (TA) angegebene Zeichen in einem Arbeitsspeicher (ASP) gespeichert und an einer Anzeigeeinrichtung (A) dargestellt werden, bei dem die Zeichen aus dem Arbeitsspeicher (ASP) ausgelesen und mittels einer Druckeinrichtung (D) an den entsprechenden Stellen auf einem Aufzeichnungsträger ausgedruckt werden, bei dem an der Anzeigeeinrichtung (A) Markierungen (BM) darstellbar sind, die jeweils den Anfang und/oder das Ende eines zu beschreibenden variablen Feldes (LVF, RVF, FVF) auf dem erstellten Formular kennzeichnen, bei dem in der Nähe der Markierungen (BM) in einzelnen Festfeldern (FF) Texte dargestellt werden, die dem Inhalt der variablen Felder (LVF, RVF, FVF) zugeordnet sind und bei dem die Schreibposition (C, P) über eine Schreibmarke dargestellt wird, **dadurch gekennzeichnet,** daß abhängig von ihrer aktuellen Position in- oder außerhalb der variablen Felder (LVF, RVF) der Schreibmarke ein Kennbit zugeordnet wird, wobei abhängig vom logischen Zustand des Kennbits die Steuerung beim Aufbau und/oder Ausfüllen der variablen Felder (LVF, RVF) eine Plausibilitätskontrolle derart vornimmt, daß bei der Eingabe von jeweils nicht zugelassenen Zeichen über die Tastatur (TA) die Zeicheneingabe unterdrückt und/oder eine Warneinrichtung (W) aktiviert wird.

2. Verfahren nach Anspruch 1, **dadurch gekennzeichnet,** daß bei jeder Änderung der Position der Schreibmarke die Anzahl der die variablen Felder begrenzenden Markierungen (BM) zwischen der alten (C1) und der neuen Position (C2) ermittelt und daß bei einer geraden Anzahl der begrenzenden Markierungen (BM) der logische Zustand des Kennbits beibehalten und bei ungerader Anzahl der begrenzenden Markierungen (BM) der logische Zustand des Kennbits verändert wird.

3. Verfahren nach Anspruch 1, **dadurch gekennzeichnet,** daß die variablen Felder (VL) links- oder rechtsbündig beschreibbar ausgebildet sind, wobei deren Begrenzungsmarkierungen (BM) in Abhängigkeit von der Art der Felder (links- oder rechtsbündig) unterschiedlich dargestellt werden.

4. Verfahren nach Anspruch 3, **dadurch gekennzeichnet,** daß durch eine Tastenbetätigung z.B. über die Tabulatortaste die variablen Felder (VL) direkt anspringbar sind, und daß die Schreibmarke in Abhängigkeit von der Art der Felder (LVF, RVF) auf die erste (P1) oder letzte (P3) Eingabestelle springt.

5. Verfahren nach einem der Ansprüche 1 bis 4, **dadurch gekennzeichnet,** daß neben variablen Feldern fester Länge (LVF, RVF) variable Felder freier Länge (FVF) vorgesehen sind.

6. Verfahren nach einem der Ansprüche 1 bis 5, **dadurch gekennzeichnet,** daß über die Warneinrichtung (W) ein akustisches oder optisches Signal auslösbar ist.

7. Verfahren nach einem der Ansprüche 1 bis 6, **dadurch gekennzeichnet,** daß es sich bei der Textstation um eine Fernschreibmaschine handelt.

## Revendications

1. Procédé pour établir et pour remplir des formulaires à l'aide d'un poste d'édition de textes, dans lequel on mémorise dans une mémoire de travail (ASP) des signes indiqués à l'aide d'un clavier (TA, qui sont représentés sur un dispositif d'affichage (A), dans lequel les signes sont extraits de la mémoire de travail (ASP) et sont imprimés, à l'aide d'un dispositif d'impression (D), en les emplacements correspondants sur un support d'enregistrement, dans lequel sont susceptibles d'être représentés sur le dispositif d'affichage (A), des repères (BM) qui caractérisent respectivement le début et/ou la fin d'une plage variable (LVF, RVF, FVF) à munir de l'écriture sur le formulaire établi, dans lequel, dans le voisinage des repères (BM) on représente dans des différentes plages fixes (FF) des textes qui sont associés au contenu des plages variables (LVF, RVF, FVF, et dans lequel la position d'écriture (C, P) est représentée par un repère d'écriture, caractérisé par le fait qu'en fonction de la position actuelle, soit à l'intérieur soit à l'extérieur des plages variables (LVF, RVF), du repère d'écriture, un bit caractéristique lui est associé, étant noté qu'en fonction de l'état logique du bit caractéristique, la commande procède, lors de la constitution et/ou du remplissage des plages variables (LVF, RVF) à un contrôle de vraisemblance qui est tel que lors de l'introduction de signes non admissibles, par l'intermédiaire du clavier (TA), l'introduction de signes est supprimée et/ou un dispositif d'alarme (W) est activé.

2. Procédé selon la revendication 1, caractérisé par le fait que lors de chaque modification ou changement de la position du repère d'écriture, on détermine, entre l'ancienne position (C1) et la nouvelle position (C2) le nombre de repères (BM) qui délimitent les plages variables, et que dans le cas d'un nombre pair de repères de délimitation (BM), l'état logique du bit caractéristique est conservé, alors que dans le cas d'un nombre impair des repères de délimitation (BM), l'état logique du bit caractéristique est modifié.

3. Procédé selon la revendication 1, caractérisé par le fait que les plages variables (VL) sont réalisées de façon à permettre l'écriture soit par la gauche soit par la droite, étant noté que ses repères de délimitation (BM) sont représentés de façon différente, en fonction du genre des plages (à justification à gauche ou à droite).

4. Procédé selon la revendication 3, caractérisé par le fait que par une commande des touches, par exemple à l'aide de la tabulatrice, les plages variables (VL) sont accessibles directement et par saut, et que le repère d'écriture saute au premier emplacement d'introduction (P1) ou au dernier emplacement d'introduction (P3).

5. Procédé selon l'une des revendications 1 à 4, caractérisé par le fait qu'en plus des plages variables de longueur fixe (LVF, RVF), on prévoit des plages variables dont la longueur peut être choisie librement (FVF).

6. Procédé selon l'une des revendications 1 à 5, caractérisé par le fait qu'à l'aide du dispositif d'alarme (W) on peut déclencher un signal acoustique ou optique.

7. Procédé selon l'une des revendications 1 à 6, caractérisé par le fait que le poste d'édition de textes est un téléscripteur.

## Claims

1. Method of preparing and filling-in forms by means of a text terminal, in which characters specified by means of a keyboard (TA) are stored in a main memory (ASP) and represented on a display device (A), in which the characters are read out from the main memory (ASP) and printed out by means of a printing device (D) at the corresponding positions on a recording medium, in which marks (BM), which in each case are the beginning and/or the end of a variable field (LVF, RVF, FVF) to be written in on the prepared form, can be represented on the display device (A), in which texts, which are assigned to the content of the variable fields (LVF, RVF, FVF), are represented in the vicinity of the marks (BM) in individual fixed fields (FF) and in which the write position (C, P) is represented by means of a cursor, characterized in that, depending on its current position inside or outside the variable fields (LVF, RVF), the cursor is assigned a characteristic bit, the control in setting-up and/or filling-in the variable fields (LVF, RVF) performing a plausibility check, depending on the logical status of the characteristic bit, in such a way that, whenever unauthorized characters are entered via the keyboard (TA), the character entry is suppressed and/or a warning device (W) is activated.

2. Method according to Claim 1, characterized in that, if there is a change in the position of the cursor, the number of marks (BM) bounding the variable fields between the old position (C1) and the new position (C2) is determined and in that, if there are an even number of bounding marks (BM), the logical status of the characteristic bit is retained and, if there are an uneven number of bounding marks (BM), the logical status of the characteristic bit is changed.

3. Method according to Claim 1, characterized in that the variable fields (VL) are designed such that they can be written in with left-margin justification or right-margin justification, their bounding marks (BM) being represented differently, depending on the type of fields (left-justified or right-justified).

4. Method according to Claim 3, characterized in that the variable fields (VL) can be moved to directly by a key actuation, for example via the tabulator key, and in that the cursor jumps to the first entry position (P1) or final entry position (P3), depending on the type of fields (LVF, RVF).

5. Method according to one of Claims 1 to 4, characterized in that, along with variable fields of fixed length (LVF, RVF), variable fields of free length (FVF) are provided.

6. Method according to one of Claims 1 to 5, characterized in that an acoustic or optical signal can be triggered via the warning device (W).

7. Method according to one of Claims 1 to 6, characterized in that the text terminal is a teleprinter.

# FIG 1

# FIG 2

lieferschein

kundenanschrift:

C1 — BML1 — P1 — C2 — BML2 — C3 — BML3 — P2 — BML4 — C4

name    : ........................................... vorname: ...............................

FF — strasse: ...........................................  nr    : ........... P3

plz   : ........... LVF    ort   : ................. RVF

FF — artikel-nr    menge RVF    einzelpreis    gesamtpreis

........ — ........    ..... — ..... RVF    ............ dm    ............ dm

........ — ........    ..... — ..... BMR    ............ dm    ............ dm

........ — ........    ..... — .....    ............ dm    ............ dm

........ — ........    ..... — .....    ............ dm    ............ dm

rechnungsbetrag: ............ dm

anmerkungen: ** BMF  FVF

# FIG 3

lieferschein

kundenanschrift:

| name    | : bruckmann      | vorname: hans-dieter |
| strasse | : koenigsberger  | nr    : 123          |
| plz     | : 8000           | ort   : muenchen 12  |

| artikel-nr  | menge | einzelpreis | gesamtpreis |
|-------------|-------|-------------|-------------|
| 058-12a-75  | 10    | 12.30 dm    | 123.00 dm   |
| 122-75d-04  | 5     | 60.00 dm    | 300.00 dm   |
| 011-22c-18  | 20    | 22.75 dm    | 455.00 dm   |
|             |       | dm          | dm          |
|             |       | rechnungsbetrag | 878.00 dm |

anmerkungen: wie vereinbart, erfolgen die lieferungen ab verkaufsstelle.
fuer die oben eingetragenen artikel gelten die
preise bis zum 01.07.1986.